# EUROPEAN PATENT APPLICATION

(11) **EP 1 779 808 A1**
(43) Date of publication of application: **02.05.2007**
(21) Application number: 05730450.3
(22) Date of filing: 14.04.2005
(51) Int. Cl.: A61C 15/00, A46B 15/00, A61C 15/02, A61C 17/00

(54) **GAP CLEANING FIN AND GAP CLEANER**

(30) Priority: 28.07.2004 JP 2004219514
(71) Applicant: Hirai, Kazutoshi, Kohtoh-ku, Tokyo 1360073 (JP)
(72) Inventor: Hirai, Kazutoshi, Kohtoh-ku, Tokyo 1360073 (JP)
(74) Representative: Hall, Matthew Benjamin
(86) International application number: PCT/JP2005/007208
(87) International publication number: WO 2006/011272

(57) **Abstract**

A cleaning-fin (F) for removing dirt in a gap, is formed by a flexible-elastic material, and is fixed in a head (7) of an operation tool (14). The cleaning-fin (F) comprises at least a spatulate apical portion (3), a pair of bottom portions (4,5) fixed in the head (7) having therebetween an interval, and a pair of side walls (1,2) connecting the spatulate apical portion (3) and each of the bottom portions (4,5). The pair of side walls (1,2) form therebetween a hollow triangle (13) becoming narrower toward the spatulate apical portion (3).

## Description

### Technical Field

The present invention relates to a cleaning-fin for removing dirt in a narrow gap, such as a gap between the teeth and any other gap, and a cleaning-tool having the cleaning-fin.

### Background Art

Conventionally, toothbrushes of various shapes have been provided to remove dirt, such as dental plaque and food debris, in a gap between the teeth, and to prevent tooth decay, periodontal diseases, and so forth.

For example, a toothbrush for removing a food debris, which arranges the bristles-line forming bristle-ends of U-shape with an approximate width of a tooth on a brush-head (see Patent Document 1), and a toothbrush having a fin which is sufficiently stiff so as to be not deformed when the fin is penetrated into a narrow gap between teeth (see Patent Document 2), have been provided. In addition, electric toothbrushes, ultrasonic toothbrushes, toothpicks, floss-toothpicks, interdental brushes, and so forth have been provided.

Toothbrushes of various brush types have also been provided. However, the teeth shape is different among users, and the front teeth and the molar are completely different in each shape. Therefore, it is extremely difficult to produce a toothbrush fitting to the teeth of every person.

Further, as for the toothbrush having the fin, it is described that the fin is sufficiently stiff so as to resist bending, and is sufficiently thin so as to penetrate narrow gaps between teeth. Since the shape of the gap between the teeth and the thickness shape of the fin do not match each other, only a part of side surfaces of teeth contacting to the fin is cleaned by scraping motion, and dental plaque staying on a part of side surfaces of the teeth not contacting to the fin is not removed.

Published data of experiment indicates that the dental plaque is effectively removed, by the electric toothbrushes causing a high speed vibrated water stream, and by the ultrasonic toothbrushes causing a mild cavitation, without contacting with the ends of the bristles of the toothbrushes. However, it is very difficult to fill the mouth with water to obtain the same effect as the experiment, and the effect cannot be exerted under a different condition. Therefore, we can obtain more stable effects by securely contacting with the ends of the bristles.

The toothpick cannot scrape side surfaces of teeth unless the shape of the tip of the toothpick fits the shape of a gap between teeth. In the floss-toothpick, a bundle of fine fibers is inserted from the occlusal side of a narrow gap, and is idle into a wide gap at the gum side. Therefore, we have to master a technique to scrape dirt from a curved side surface of a tooth. The interdental brush requires a wide gap to insert between teeth, therefore it cannot penetrate into a narrow gap and a periodontal pocket. There are many problems such as this.
Patent Document 1: Japanese Unexamined Utility Model Registration Application Publication No. H07-13229
Patent Document 2: PCT Japanese Translation Patent Publication No. 2002-507926

### Disclosure of the Invention

The present invention has been made in view of the above-described background, and, it is an object of the present invention to provide a cleaning-fin capable of securely and effectively scraping out dirt accumulated in a narrow gap, such as a gap between teeth, and to provide a cleaning-tool having the cleaning-fin.

According to the present invention, a cleaning-fin for removing dirt in a gap is fixed in a head of an operation tool, and the cleaning-fin is formed by a flexible-elastic material. The cleaning-fin comprises at least a spatulate apical portion, a pair of bottom portions fixed in the head with an interval therebetween, and a pair of side walls connecting the spatulate apical portion and each bottom portion, the pair of side walls form therebetween a hollow triangle becoming narrower toward the spatulate apical portion.

The pair of bottom portions of the cleaning-fin having therebetween an interval are fixed in the head, and the pair of side walls of the cleaning-fin having therebetween the hollow triangle jut from the head. In the attached state of the cleaning-fin to the head, the cleaning-fin is easily flexed in the direction of a horizontal plane intersecting the side walls, but is not easily deformed in the direction of length of the bottom portions. Therefore, even if the spatulate apical portion is not perpendicularly contacted to the gap, the spatulate apical portion easily penetrates into the gap due to the direction of being able to flex easily the cleaning-fin. Further, in the state in which the spatulate apical portion is inserted in the gap, when the cleaning-fin is operated in the direction of un-flexibility, the dirt in the gap can be securely scraped out with strong force. When the spatulate apical portion comes out from the gap, the cleaning-fin restores to the upright posture due to the characteristic of a flexible-elasticity of the side walls.

Further, since the cleaning-fin has the hollow triangle, the cleaning-fin does not forcefully push to expand the gap when the cleaning-fin is inserted into the gap. The cleaning-fin can be inserted into the gap without difficulty and with low resistance due to the deformation of the hollow triangle.

As one embodiment, in order to ensure the elastic support of the spatulate apical portion, it is preferable that the length of each of the pair of bottom portions is longer than the width of the spatulate apical portion.

As another preferable embodiment, the cleaning-fin may have a plurality of the spatulate apical portions. In this case, we can use the only one of the several spatulate apical portions, or we can use the several spatulate apical portions at the same time. If we use the several spatulas at the same time, we can clean a wide curved or irregular surface effectively.

As one embodiment, it is preferable that a thickness of the spatulate apical portion is thinner than a thickness of sum of the pair of side walls. With this configuration, the spatulate apical portion easily penetrates into the gap, and the side walls can have better flexible-elasticity.

Further, according to the present invention, a cleaning-tool comprises an operation tool having a handle and a head, and a cleaning-fin formed by a flexible-elastic material. The cleaning-fin comprises spatulate apical portions, a pair of bottom portions, and a pair of side walls connecting the spatulate apical portion and each bottom portion. The pair of bottom portions of the cleaning-fin having therebetween an interval are fixed in the head, and the pair of side walls of the cleaning-fin having therebetween the hollow triangle becoming narrower toward the spatulate apical portion jut from the head.

A user holding the handle can clean a gap by moving the spatulate apical portion operating the position and the angle of the cleaning-fin with respect to the gap.

As one preferable embodiment, the cleaning-fin can be attachable to and detachable from the head. In this embodiment, the cleaning-fin can be replaced. Thus, the operation tool can be used for a long time, which is economical. Further, we can use the cleaning-fins of various shapes, which we replace appropriately to the head. Therefore, we can effectively clean by the cleaning-fin being suitable for the shape of the gap.

### Brief Description of the Drawings

Fig. 1 is a perspective view of a cleaning-fin according to an embodiment of the present invention.
Fig. 2 is a perspective view of a cleaning-fin according to another embodiment.
Fig. 3 is a perspective view of a cleaning-fin according to still another embodiment.
Fig. 4 is a partly omitted perspective view of a cleaning-tool formed by attaching the cleaning-fin illustrated in Fig. 2 to an operation tool.
Fig. 5 is a partly omitted perspective view illustrating an example of an attachable and detachable mechanism of the cleaning-fin.
Fig. 6 is a partly omitted perspective view illustrating another embodiment of the cleaning-tool.

### Best Mode for Carrying Out the Invention

According to the present invention, a cleaning-fin F is the fin for scraping out dirt which is accumulated in various gaps, by operating the cleaning-fin of an appropriate shape attached to an operation tool. And the following embodiments show, as an example, cases in which the present invention is applied to a cleaning-tool for cleaning a gap between teeth of man.

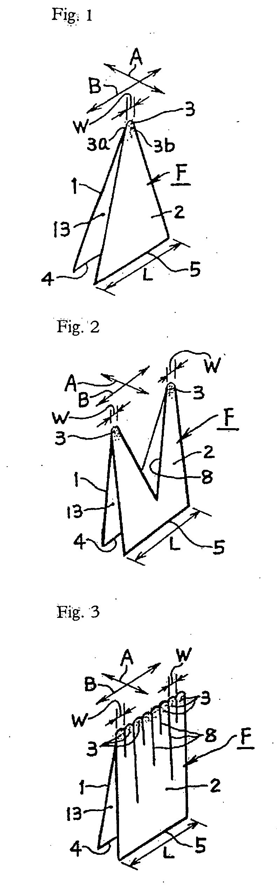

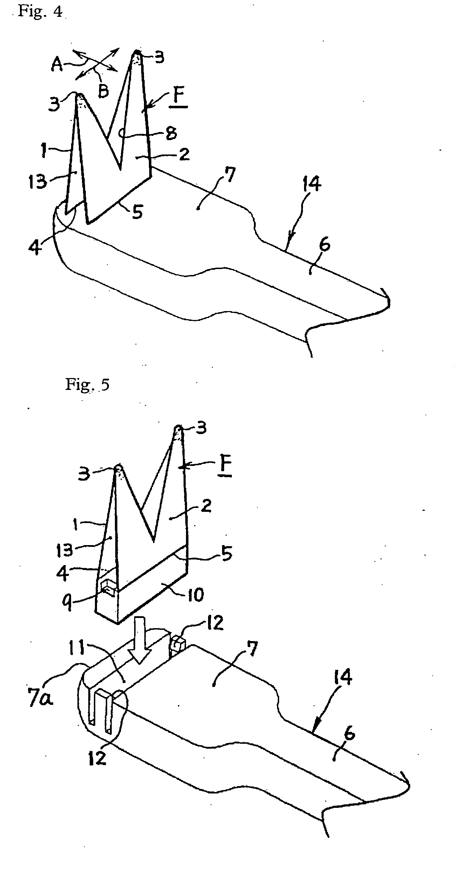

According to the present embodiment, a cleaning-fin F can be formed by a flexble-elastic material. As illustrated in Figs. 1 to 3, the cleaning-fin F comprises a spatulate apical portion 3 having a predetermined width W, a pair of bottom portions 4 and 5 extending in the direction of the width W of the spatulate apical portion 3, and a pair of side walls 1 and 2 connecting the spatulate apical portion 3 and each bottom portion 4 and 5. The pair of side walls 1 and 2 have good flexible-elasticity and form therebetween a hollow triangle 13 becoming narrower toward the spatulate apical portion 3. The spatulate apical portion 3 is elastically supported by the good flexible-elasticity of the pair of side walls 1 and 2. In order to ensure the elastic support of the spatulate apical portion 3, it is preferable that the length L of each of the bottom portions 4 and 5 is longer than the width W of the spatulate apical portion 3. When used, the spatulate apical portion 3 is penetrated into the gap between teeth and can scrape the dirt in the gap. As will hereinafter be described in detail, as illustrated in Fig. 4, the cleaning-fin F is fixed in the head 7, having an interval of approximately 3 mm between the bottom portions 4 and 5, and can be used in a state standing on the upper surface of the head 7.

Figs. 1 to 3 illustrate, as examples, specific shapes of the cleaning-fin F. The cleaning-fin F illustrated in Fig. 1 is an example having only single spatulate apical portion 3. The cleaning-fin F illustrated in Fig. 2 is an example having two spatulate apical portions 3. A V-shaped incision 8 is formed between the two spatulate apical portions 3 and 3 to separate from each other. The cleaning-fin F illustrated in Fig. 3 is an example having a plurality of the spatulate apical portions 3. There are parallel vertical incisions 8 between adjacent ones of the spatulate apical portions 3, such that they separate to one another. In the cleaning-fins illustrated in Figs. 2 and 3, each one of the spatulate apical portions 3 has the flexible-elasticity, and the respective spatulate apical portions 3 can be operated independently or together to clean a gap between teeth.

In the cleaning-fin F illustrated in Fig. 3, if the incisions 8 reach each bottom portion 4 and 5, the elastic support of the respective spatulate apical portions 3 is reduced. Therefore, it is desirable to limit the depth of each of the incisions 8 so as not to reach the respective bottom portions 4 and 5. The shorter the depth of the incisions 8 is, the greater the elasticity of the respective spatulate apical portions 3 becomes. Accordingly, as illustrated in Fig. 3, the flexible-elasticity of respective spatulate apical portions 3 is varied by making differences in the depth among the incisions 8.

The cleaning-fin F can be formed by superimposing and joining at top portions 3a and 3b of two thin sheets 1 and 2, which have the top portions 3a and 3b and the bottom portions 4 and 5, respectively. The joining area of the top portions 3a and 3b becomes the spatulate apical portion 3. In the cleaning-fin F, parts other than the spatulate apical portion 3 are not joined.

Each of the side walls 1 and 2 can be formed by a thin plastic sheet, for example approximately 0.1 mm thickness, having a characteristic of good flexible-elasticity with respect to bend. The side walls 1 and 2 are usually the same as each other in the shape and the size. The vertical length of each of the side walls 1 and 2 may be a hight of approximately 10 to 15 mm from the upper surface of the head 7, in the state of being attached to the head 7. Each of the width L of bottom portions 4 and 5 of the side walls 1 and 2, respectively, may be longer than the width W of the spatulate apical portion 3, for example the width L may be approximately 10 mm.

The apical portions 3a and 3b are superimposed on each other, and then joined to a thin spatula-shape by such a method as a heat-pressure. It is preferable that the thickness of the spatulate apical portion 3 formed by joining, is thinner than the sum of the thicknesses of the two thin sheets 1 and 2, as the spatulate apical portion 3 easily penetrates into a narrow gap between teeth with low resistance, for example approximately 0.05 mm thickness.
Further, the spatulate apical portion 3 is formed into a thin-end taper shape which becomes thinner toward the end thereof. In accordance with these characteristics, even if the spatulate apical portion 3 does not contact in perpendicular to the gap between teeth, the spatulate apical portion 3 is easily deformed along surfaces of teeth, and can penetrate into the gap with low resistance. It is preferable that the friction coefficient of a surface of the spatulate apical portion 3 is as small as possible.

Further, it is desirable that the spatulate apical portion 3 has not a sharp edge but an edge having the predetermined width, for example approximately 1 mm width, and having a round a corner, so that the edge of the spatulate apical portion 3 will not damage the gum. Since a similar reason, it is desirable to make a process to the spatulate apical portion 3, such as a heat process and a chemical process, for making a dull edge.

As another manufacturing method, the cleaning-fin F may be manufactured by punching out a thin sheet coupling two thin sheets 1 and 2, at a top end 3a and 3b, and folding the thin sheet at the top end, and making a heat-pressure process to a folded portion of the thin sheets.

The hollow triangle 13 becomes narrower toward the spatulate apical portion 3 in a lateral view. Since the cleaning-fin F has the hollow triangle 13, when the spatulate apical portion 3 penetrates into the gap between teeth, the cleaning-fin F does not push and separate forcefully side surfaces of the teeth being both sides of the gap. Further, since the hollow triangle 13 becomes wider toward the bottom portions 4 and 5, we can clean effectively by inserting the cleaning-fin F till an appropriate depth, in a wide gap between teeth or in a gap between teeth having varied width. Usually, vertical gaps or grooves formed between teeth are not parallel to one another. Further, the teeth alignment is different among individuals, and a same person may have good and bad teeth alignments, depending on location. The cleaning-fin F having the hollow triangle 13, is able to apply favorably to any one of gaps of various shapes.

There are a direction in which the cleaning-fin F flexes easily and a direction in which the cleaning-fin F does not flex easily. That is, as illustrated in Figs. 1 to 4, the spatulate apical portion 3 is easily flexed in the direction of horizontal A intersecting with the planes of the side walls 1 and 2, and is not easily flexed in the direction of length B of the bottom portions 4 and 5. Therefore, even if the spatulate apical portion 3 does not contact in perpendicular to the gap between teeth, due to the direction A of being able to flex easily the cleaning-fin F, the spatulate apical portion 3 well follows curved surfaces and irregular surfaces of teeth, and penetrates easily into the gap between teeth. Further, in the state in which the spatulate apical portion 3 is inserted in the gap between teeth, if the cleaning-fin F is moved in the direction of B of un-flexibility, the dirt in the gap between teeth can be securely scraped out with strong force. When the spatulate apical portion 3 comes out of the gap, the cleaning-fin returns to the upright posture due to the flexible-elasticity of the side walls 1 and 2.

The cleaning-fin F is effective not only for cleaning in the gap between teeth but also for cleaning a boundary area between teeth and gum. In this case, a user applies the spatulate apical portion 3 to the boundary area between teeth and gum, and moves the cleaning-fin F in the direction of the extending area of boundary so that the spatulate apical portion 3 may flex in the direction of A. Since the cleaning-fin F flexes appropriately, the cleaning-fin F does not damage the gum. Further, unlike the sharp tip of the toothpick or the like, the spatulate apical portion 3 has the predetermined width W. Therefore, the cleaning-fin F is suitable for scraping dirt in the boundary area between teeth and gum. In particular, the cleaning-fin F illustrated in Fig. 2 has the two spatulate apical portions 3 which have the interval therebetween. Thus, we can clean the boundary area between teeth and gum, by applying one of spatulate apical portions 3 which can contact more easily with the area to be cleaned than the other. Further, the cleaning-fin F illustrated in Fig. 3 has the plurality of the spatulate apical portions 3, with no intervals therebetween. Thus, we can flexibly apply the cleaning-fin F, in a wide range, to the boundary area between teeth and gum, and to the irregular or curved surfaces of teeth.

As illustrated in Fig. 4, each of the cleaning-fins F illustrated in Figs. 1 to 3, becomes a cleaning-tool for cleaning teeth as a cleaning-tool for cleaning a gap, when the cleaning-fin F is attached to an operation tool 14 of a toothbrush which has not bristles. The operation tool 14 has a handle 6 and a head 7 which is a base formed at the end of the handle 6. The bottom portions 4 and 5 of the cleaning-fin F are fixed in the head 7. In the attached state of the cleaning-fin, the bottom portions 4 and 5 extend in the direction of width of the head 7. Further, the bottom portions 4 and 5 have therebetween a predetermined interval of approximately 3 mm. Therefore, in a lateral view, the hollow triangle 13 of an approximately vertically long triangle shape is formed between the thin sheets 1 and 2. The apical angle of the hollow triangle 13 becomes an acute angle. A user holding the handle 6 of the operation tool 14, can scrape the dirt in the gap between the teeth or at the boundary area between teeth and gum, by operating the spatulate apical portion 3, while operating the position and the angle of the cleaning-fin F with respect to the teeth of himself.

Fig. 5 illustrates an embodiment of an attaching portion of the cleaning-fin F, which is attachable to and detachable from the head 7. That is, in Fig. 5, the cleaning-fin F is previously fixed to a block 10 having latch steps 9 at both ends. The head 7 has a fitted groove portion 11 in which the block 10 fits precisely. Latch claws 12 are formed at both ends of the fitted groove portion 11. The latch claws 12 engage with the respective latch steps 9 of the block 10 by the flexible-elasticity. When the block 10 fixing the cleaning-fin F inserts in the fitting groove portion 11, the respective latch claws 12 naturally engage with the corresponding latch steps 9. Thereby, the block 10 is fixed as not getting out of the head 7. We can detach the block 10 from the head 7 by disengaging the respective latch claws 12 having the flexible-elasticity from the latch steps 9. As a modified example illustrated in Fig. 5, the fitting groove portion 11 may be formed as extending in the direction of length of the handle 6.

Since the cleaning-fin F is attachable to and detachable from the head, when the cleaning-fin F is worn or damaged, the operation tool 14 can continue to be used by replacing the another cleaning-fin F, which is economical. Further, there is an advantage that a user can use many kinds of replacement cleaning-fins prepared in accordance with individuals or purposes on the single operation tool 14.

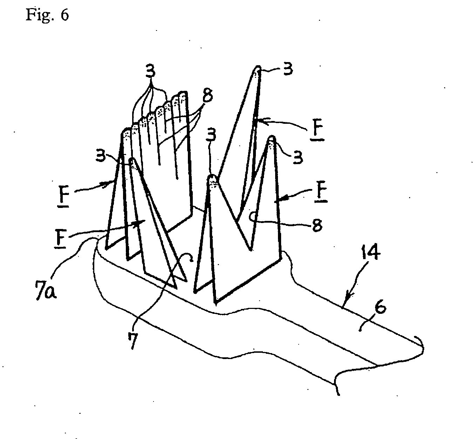

Furthermore, Fig. 6 illustrates an embodiment in which the respective cleaning-fins F illustrated in Figs. 1, 2, and 3, are fixed in the head 7 in combination. According to the embodiment, we can select the respective cleaning-fins F in accordance with purposes. Thus, it is not necessary to prepare the several cleaning-tools. Further, in the combination of the attachable and detachable mechanism (see Fig. 5), the cleaning-fins F of various shapes fitting various uses, which can be attached to the head 7 and detached from the head 7, to be perpendicular or parallel to the handle 6. Accordingly, we can clean by making a cleaning-tool having the cleaning-fin fitting the region to be cleaned.

As another embodiment, a mechanism to reciprocate or ultrasonically vibrate a base portion of the cleaning-fin may be provided between the cleaning-fin F and the head 7.

Further, if the attachable and detachable mechanism of the cleaning-fin F is also equipped at an end surface 7a of the head 7, which is perpendicular to the upper surface of the head 7, we can clean also in a narrow gap of complicated shapes and various angles by holding the handle 6, such as drawing with a pen.

The embodiments described above relate to the cleaning-fin for cleaning the gap between teeth and the cleaning-tool. But the specifications of the cleaning-fin F and the operation tool 14, may be appropriately determined in accordance with purposes. For example, like the gap between the teeth, narrow gaps in kitchens or gaps in appliances are also different in the shape, width and depth. If the cleaning-fin F of the present invention is used, we can well clean those gaps.

## Claims

1. A cleaning-fin (F) for removing dirt in a gap, formed by a flexible-elastic material, and fixed in a head (7) of an operation tool (14), the cleaning-fin comprising:
at least a spatulate apical portion (3);
a pair of bottom portions (4,5) fixed in the head (7)
having therebetween an interval; and
a pair of side walls (1,2) connecting the spatulate apical portion (3) and each bottom portion (4,5),
wherein the pair of side walls (1,2) form therebetween a hollow triangle (13) becoming narrower toward the spatulate apical portion (3).

2. The cleaning-fin of claim 1, wherein each length (L) of said pair of bottom portions (4,5) is longer than width (W) of said spatulate apical portion (3).

3. The cleaning-fin of either claim 1 or claim 2, wherein said spatulate apical portion (3) is divided into the plural.

4. The cleaning-fin of either claim 1, claim 2 or claim 3, wherein the thickness of said spatulate apical portion (3) is thinner than the thickness of sum of said pair of side walls (1,2).

5. A cleaning-tool comprising an operation tool (14) having a handle (6) and a head (7), and a cleaning-fin (F) formed by a flexible-elastic material, the cleaning-fin (F) comprising:
at least a spatulate apical portion (3),
a pair of bottom portions (4,5),
and a pair of side walls (1,2) connecting the spatulate apical portion (3) and each bottom portion (4,5),
wherein the pair of bottom portions (4,5) having therebetween an interval are fixed in the head (7), and the pair of side walls (1,2) having therebetween a hollow triangle (13) becoming narrower toward the spatulate apical portion (3) jut from the head (7).

6. The cleaning-tool of claim 5, wherein said cleaning-fin (F) is attachable to and detachable from said head (7).
